# FASCICULE DE BREVET EUROPEEN

(11) **EP 2 167 715 B1**
(45) Date de publication et mention de la délivrance du brevet: **13.04.2016**
(21) Numéro de dépôt: 08806154.4
(22) Date de dépôt: 02.07.2008
(51) Int. Cl.: D04H 1/4218, D04H 1/587, C02F 1/66, C03C 25/14, D04H 1/645, D04H 1/655, D04H 3/004, C03C 25/28, C02F 103/12

(54) **PROCEDE DE RECYCLAGE DES EAUX ISSUES D'UN PROCEDE DE FABRICATION D'UN MATELAS ISOLANT DE FIBRES MINERALES**
VERFAHREN ZUM RECYCLING VON AUS EINEM VERFAHREN ZUR HERSTELLUNG EINER ISOLATIONSMATRATZE AUS MINERALFASERN STAMMENDEM WASSER
METHOD FOR RECYCLING WATER RESULTING FROM A METHOD FOR PRODUCING AN INSULATING MATTRESS OF MINERAL FIBRES

(30) Priorité: 04.07.2007 FR 0756267
(43) Date de publication de la demande: 31.03.2010
(73) Titulaire: Saint-Gobain Isover, 92400 Courbevoie (FR)
(72) Inventeur: VALERO, Rémi, F-69160 Tassin La Demi Lune (FR); LERICQUE, Bernard, F-60290 Monchy Saint Eloi (FR); PONNOURADJOU, Alexis, 02472 WATERTOWN - MASSACHUSETTS (US)
(74) Mandataire: Lucas, Francois
(86) Numéro de dépôt international: PCT/FR2008/051230
(87) Numéro de publication internationale: WO 2009/007648

(56) Documents cités:
- US-A- 3 966 600
- US-A1- 2006 198 954
- US-B2- 7 153 437

## Description

L'invention se rapporte au domaine des matériaux à base de fibres minérales, notamment de laine minérale de type laine de verre ou de roche. Plus particulièrement, la présente invention se rapporte à un procédé et à un dispositif permettant le recyclage des eaux récupérées dans un procédé de fibrage et mise en forme, lorsqu'un liant acide, comprenant typiquement un polyacide du type acrylique, est utilisé.

La majorité des matériaux tels que les panneaux ou rouleaux d'isolation commercialisés à l'heure actuelle sont constitués d'un matelas ou feutre de laine minérale comprenant des fibres minérales, telles que des fibres de verre liées par un liant organique.

Les différentes étapes et dispositifs nécessaires à la fabrication des matériaux d'isolation de ce type sont parfaitement connus de la technique. Typiquement, la formation du matelas de fibres de verre comprend un procédé de fibrage par centrifugation interne dont des exemples de réalisation sont décrits dans les demandes EP 0 406 107 ou EP 0 461 995, auxquelles on pourra se référer concernant le détail des étapes déjà connues pour la mise en oeuvre de la présente invention, sans qu'il soit besoin ici à nouveau de les décrire de manière extensive.

Plus précisément, il est de pratique courante pour la formation des matelas ou feutres précités d'appliquer par pulvérisation sur les fibres néoformées une solution aqueuse d'un liant permettant après cuisson la liaison des fibres entre elles, tel que cela est illustré dans la suite de la description, en liaison avec les figures jointes. Jusqu'à une époque très récente, le liant utilisé était très majoritairement du type phénol-formaldéhyde (également appelé liant formophénolique). Dans de tels procédés, la chaleur résiduelle des fibres minérales et le souffle d'air chaud créé par des moyens appropriés à travers le matelas de fibres, réceptionné sur un convoyeur après le fibrage, sont suffisants pour vaporiser et éliminer la très grande majorité de l'eau en excès contenue dans la composition de liant initiale. Le matelas de laine minérale, débarrassé de la majeure partie de son humidité, est ensuite envoyé dans une enceinte ou étuve pour terminer le séchage et effectuer la cuisson du liant. De façon connue, cette cuisson est effectuée dans des conditions permettant d'assurer à la fois la tenue mécanique final du matelas obtenu, de part la liaison entre les fibres, ainsi que sa souplesse, c'est-à-dire sa capacité à retrouver sensiblement ses forme et épaisseur initiales, après une étape de forte compression notamment nécessaire à son conditionnement et à son transport.

Pour remplir les fonctions précédentes, les résines du type phénol-formaldéhyde, de part leur excellent rapport coût/performance ainsi que leur relative facilité de préparation et d'utilisation, ont été jusqu'à présent les plus utilisées. Les solutions actuelles de liant comprennent également par exemple de l'urée, et se présentent, avant pulvérisation sur les fibres, sous la forme d'une solution ou d'une dispersion aqueuse d'un extrait sec compris entre 30 et 60% poids.

Cependant, de telles formulations de liant peuvent avoir l'inconvénient d'émettre, essentiellement au cours du processus de fabrication de la laine minérale, des quantités très limitées de composés volatils organiques, souvent appelés VOC, en particulier de formaldéhyde. Pour anticiper des situations où la limite acceptable de telles émissions serait de plus en plus faible, de nouveaux types de liants ont été développés plus récemment.

Tout particulièrement, les solutions de liants incorporant dans leur composition des polyacides carboxyliques ou des précurseurs de ceux-ci, couramment appelés dans le domaine liants acryliques, sont apparues comme des produits de remplacement intéressants. Tout particulièrement, les propriétés de rigidité et de recouvrement de forme des matelas de fibres de verre obtenus avec certaines compositions de liant acrylique peuvent apparaître maintenant comparables à celles obtenues avec un liant formophénolique. Par exemple, mais non limitativement, la solution de liant acrylique, outre le polyacide, comprend également un polyalcool et un catalyseur de la réaction, par exemple un acide organique du phosphore, tel que cela est par exemple illustré par le brevet US 5,661,213.

Le principal problème lié à l'utilisation de ce type de résine réside dans l'acidité de la solution de liant pulvérisée sur les fibres au niveau de la chambre de fibrage. Ainsi, selon le type de résine utilisé, un pH de la solution généralement inférieur à 4 voire le plus souvent inférieure à 3 ou même à 2,5 est nécessaire pour l'obtention finale d'un matelas présentant les bonnes propriétés d'utilisation.

Il en résulte que les eaux issues du procédé de fibrage, notamment récupérées au niveau du tapis de convoyage des fibres après le fibrage, présentent une acidité très marquée.

Il est courant dans le domaine de recycler et d'utiliser au moins une partie de cette eau de récupération, et de préférence la totalité de celle-ci, pour la fabrication de la solution de liant en amont du fibrage et/ou pour le nettoyage des dispositifs constituant la ligne de fibrage, comme il sera précisé par la suite. Une telle configuration a notamment pour avantage de minimiser fortement le coût de l'installation, en rendant inutile le traitement des eaux usées issues du procédé ou en en minimisant fortement les quantités à traiter. Dans une variante souvent utilisée dans l'art antérieur, préférée mais non obligatoire selon l'invention, la boucle de recyclage des eaux issues du procédé de fibrage peut incorporer l'utilisation d'au moins une partie ou même de la totalité des eaux récupérées pour le lavage des différents éléments constitutifs de l'appareillage qui permet l'obtention du matelas de fibres. Plus précisément, ces appareillages sont ceux qui sont en contact avec la solution de liant et les fibres lors du procédé de fibrage, notamment les parois de la chambre ou hotte de fibrage, les moyens de convoyage des fibres après fibrage ou encore les moyens de ventilation mis en oeuvre pour l'élimination de l'excès d'eau dans le matelas fibreux. La boucle de recyclage peut également incorporer l'utilisation d'au moins une partie ou même de la totalité des eaux récupérées, pour le lavage et/ou le refroidissement des fumées et gaz générés dans le procédé, tels que les gaz issus de l'étuve de cuisson du liant ou de l'unité de fibrage.

On conçoit donc que, dans le cadre d'un tel recyclage, le caractère d'acidité marqué des eaux de récupération constitue un vrai problème car les équipements tels que les canalisations permettant le recyclage sont soumises à une très forte corrosion. De ce fait leur durée de vie devient significativement limitée.

Une solution possible et évidente consiste à utiliser des conduites faites dans un métal connu pour ses qualités de résistance à la corrosion, tel que l'acier inoxydable. Cependant, une telle solution implique un surcoût important et ne garantit pas une efficacité suffisante dans le temps, tout en posant pour le personnel d'entretien des problèmes de manipulations des liquides présents dans le circuit, notamment si ce dernier doit être purgé ou nettoyé.

D'autres solutions ont été proposées pour allonger la durée de vie desdites canalisations :
Selon une première réalisation, la demande de brevet US2003/221457 propose de mesurer le pH des eaux de récupération au sein d'un dispositif collecteur placé au centre du circuit de recyclage. La mesure du pH est effectuée par le biais d'une sonde pH renseignant en continu un processeur, lui-même relié à un réservoir d'une solution de base. Selon le principe de fonctionnement de ce procédé, si la sonde détecte que le pH des eaux de récupération est inférieur à un pH de 8, le processeur déclenche l'introduction de base dans le circuit.
Selon une autre réalisation décrite dans la demande US2006/198954, variante de la précédente, un dispositif de détection de la corrosion, placé sur la ligne de recyclage avant ou après le dispositif collecteur des eaux ou dans celui-ci, est utilisé pour maintenir le niveau de corrosion à une valeur acceptable pour le métal constituant les parois du circuit de recyclage.

Le brevet US 7,153,437 décrit une solution également très similaire à la demande US2003/221457, avec pour différence que la consigne de pH donnée par l'unité de contrôle de la libération de la solution de base au sein de la ligne de recyclage est cette fois située entre 6 et 8.

Toutes les solutions proposées à ce jour font ainsi intervenir des moyens de contrôle en continu de l'acidité ou du pouvoir corrodant de la solution aqueuse circulant dans le circuit de recyclage des eaux du procédé de fibrage. Ces moyens de contrôle impliquent l'utilisation et l'étalonnage de sondes spécifiques (pH, corrosion) dont le coût unitaire est élevé, et dont la durée de vie s'avère assez réduite en utilisation.

Un tel coût rend au final assez limité sur la durée le gain occasionné par un tel contrôle, notamment par rapport à une utilisation de conduites en acier inoxydable.

De façon inattendue, alors que l'enseignement de l'art antérieur oriente le spécialiste vers des solutions impliquant un réglage fin et en continu de l'acidité et/ou de la corrosivité des eaux circulant dans le circuit de recyclage, il a été trouvé par le demandeur que des solutions moins évoluées et surtout moins coûteuses permettaient une régulation tout à fait acceptable du niveau de corrosion des conduits constituant ledit circuit de recyclage.

Plus particulièrement et selon un premier point, les expériences menées par le demandeur montre que les variations de pH au sein du circuit peuvent évoluer dans une large gamme autour de la neutralité, c'est-à-dire typiquement supérieur à 6, voire supérieur à 6,5 et inférieur à 9, voire inférieur à 8,5, sans que des problèmes majeurs de corrosion ne soient observés dans la durée sur les conduites.

Selon un autre point, il a été trouvé par le demandeur que l'utilisation de sondes coûteuses pour la mesure du pH ou du niveau de corrosion, ainsi que des moyens de contrôle associés, n'était pas nécessairement utile pour la bonne gestion du niveau de corrosion du circuit.

Plus précisément, de façon étonnante, il a été expérimenté par le demandeur qu'un contrôle suffisant du niveau d'acidité du pH des eaux de récupération dans le circuit de recyclage pouvait être assuré, sur une durée relativement importante d'utilisation de l'appareillage, sur la base d'une relation simple entre le débit de liant acide introduit dans le produit de fibrage et le débit de la solution de base introduite dans les eaux de recyclage.

Dans sa forme la plus générale, la présente invention ainsi pour objet un procédé de contrôle du niveau de corrosivité d'une solution aqueuse récupérée lors d'un procédé de production d'un matelas de fibres minérales, comprenant notamment le fibrage et la liaison desdites fibres par un liant comprenant un polyacide typiquement du type acrylique, ladite solution aqueuse étant recyclée au moins en partie vers une zone de préparation dudit liant et/ou une zone de lavage de l'installation de production, le procédé se caractérisant en ce qu'on maintient le pH de la solution dans le circuit de recyclage entre des valeurs minimale et maximale par l'introduction dans ledit circuit d'un agent de modification dudit pH telle qu'une base, le débit de l'agent de modification du pH étant ajusté directement en fonction du débit de liant acide introduit au cours du procédé de fibrage.

De la façon la plus simple, le débit de l'agent de modification du pH dans le circuit de recyclage peut être directement proportionnel au débit de liant acide introduit dans le procédé de fibrage.

Selon l'invention, on peut ajuster à intervalles réguliers le ratio R par une mesure ponctuelle du pH des eaux récupérés au niveau du circuit de recyclage.

Typiquement, la valeur de consigne du pH est comprise entre environ 6 et environ 9.

Selon l'invention, les eaux du procédé de fibrage sont récupérées au moins en partie au niveau du tapis de convoyage des fibres, après ledit fibrage.

Les eaux du procédé de fibrage peuvent également être récupérées au moins en partie au niveau de l'étuve de réticulation des fibres minérales.

Avantageusement, l'eau récupérée est au moins en partie utilisée pour le lavage d'au moins un des éléments constitutifs du dispositif d'obtention du matelas de fibres, notamment les parois de la chambre ou hotte de fibrage, les moyens de convoyage des fibres, les moyens de ventilation mis en oeuvre pour l'élimination de l'excès d'eau dans le matelas fibreux ou encore l'enceinte de réticulation des fibres.

Par exemple, l'agent de modification du pH est choisi parmi les bases alcalines du type hydroxyde ou carbonate d'alcalin ou d'alcalino-terreux.

Le polyacide est en général choisi parmi les acides polycarboxyliques de la famille des acides acrylique, méthacrylique, crotonique, isocrotoniques, maléïque, cinnamique.

L'invention se rapporte en outre à une installation de production d'un matelas de fibres comprenant une unité de fibrage incorporant des moyens de pulvérisation d'une solution d'un liant comprenant un polyacide typiquement du type acrylique sur les fibres néoformées, des moyens de réception et de convoyage des fibres imprégnées du liant vers une enceinte de réticulation et des moyens d'aspiration d'une solution aqueuse comprenant l'eau et le liant en excès dans le matelas de fibres réceptionné sur les moyens de convoyage, lesdits moyens d'aspiration étant en communication de fluide avec une boucle de recycle de ladite solution aqueuse vers une station de préparation de la solution de liant alimentant les moyens de pulvérisation et/ou vers des moyens de lavage de l'installation, ladite installation se caractérisant en ce qu'elle comprend en outre des moyens d'introduction et de régulation d'une quantité contrôlée d'un agent de modification dudit pH telle qu'une base et en ce que lesdits moyens de régulation sont assujettis à des moyens de contrôle calibrés en fonction de la quantité du polyacide introduite dans l'unité de fibrage.

D'autres détails, caractéristiques ou avantages sont illustrés par les modes de réalisation de l'invention qui suivent, décrits en référence aux figures 1 à 4 annexées.
La figure 1 illustre le détail d'un dispositif de fibrage d'un matelas de laine de verre connu en soi et incorporant l'utilisation d'un liant acide.
La figure 2 est une vue synoptique d'une ligne de production selon l'invention de fabrication de panneaux isolants à base de laine de verre, incorporant un circuit de recyclage de l'eau en excès issue du dispositif de fibrage.
La figure 3 diffère de la figure 2 en ce que le circuit de recyclage incorpore en outre des moyens de lavage des parois de la hotte de fibrage.
La figure 4 diffère de la figure 3 en ce que en ce que le circuit de recyclage incorpore en outre des moyens de lavage des fumées issues de l'étuve de réticulation.

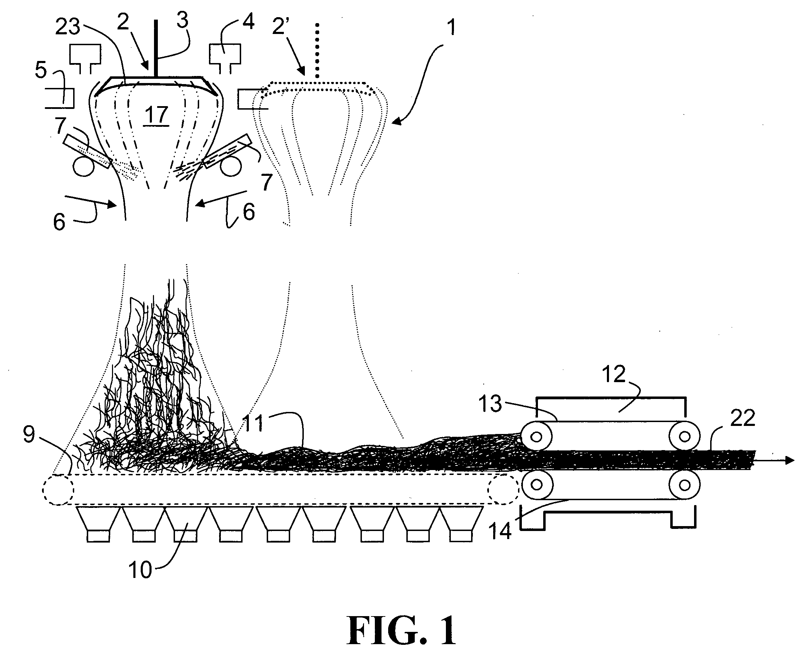

Sur la figure 1, on a représenté un dispositif classiquement utilisé pour le fibrage de la laine de verre par exemple conforme au procédé de fibrage par centrifugation interne développé par le demandeur, dont des exemples de réalisation sont décrits dans les demandes EP 0 406 107 ou EP 0 461 995. L'unité de fibrage 1 proprement dite est parfaitement connue. L'unité de fibrage comporte une hotte (non représentée sur la figure 1) surmontée d'un ou plusieurs centrifugeurs 2, 2'. Chaque centrifugeur comprend un panier (non représenté sur la figure 1) pour la récupération du verre fondu et une pièce 23 en forme d'assiette dont la paroi périphérique est munie d'un grand nombre d'orifices. En fonctionnement, le verre fondu, amené en un filet 3 depuis un four de fusion (non représenté) et d'abord récupéré dans le panier du centrifugeur, s'échappe par les orifices de l'assiette 23 sous la forme d'une multitude de filaments entraînés en rotation. Le centrifugeur 2 est par ailleurs entouré par un brûleur annulaire 4 qui crée à la périphérie de la paroi du centrifugeur un courant gazeux à grande vitesse et à température suffisamment élevée pour étirer les filaments de verre en fibres sous la forme d'un tore 17. Le fibrage selon ce procédé est intégral et produit 100% de fibres utiles. Le procédé garantit en outre des fibres longues et souples.

Le tore 17 est refermé par un courant gazeux d'air introduit sous pression, schématisé par les flèches 6. Le tore 17 est entouré par un dispositif de pulvérisation de liant contenant une solution aqueuse d'un polyacide typiquement du type acrylique, dont seuls deux éléments 7 sont représentés sur la figure 1. Par exemple des solutions aqueuses de liant possibles sont celles décrites dans les publications US2003/221457, US2006/198954 ou encore US 7,153,437.

Le fond de la hotte de fibrage est constitué par un dispositif de réception des fibres comprenant un convoyeur 9 incorporant une bande sans fin perméable aux gaz et à l'eau, sous laquelle sont disposés des caissons d'aspiration 10 et de séparation des fluides contenus dans le matelas néoformé, issus du processus de fibrage précédemment décrit. Les caissons d'aspirations 10 sont par exemple reliés à un ventilateur (non représenté sur la figure 1) permettant de maintenir ceux-ci en dépression. Les fluides sont des gaz tels que l'air et les fumées ainsi qu'une phase aqueuse excédentaire incorporant le liant en excès ainsi que des fines. Il se forme sur la bande du convoyeur 9 un matelas 11 de fibres de laine de verre mélangées intimement avec le liant. Le matelas 11 est conduit par le convoyeur jusqu'à une étuve ou enceinte 12 de réticulation. Cette enceinte 12 est habituellement constituée par une chambre fermée comprenant une série de caissons ou compartiments alimentées par des brûleurs en air chaud mis en circulation par des ventilateurs (non représentés sur la figure 1). L'enceinte est par exemple traversée par deux convoyeurs complémentaires 13, 14 de transport et de calibrage.

Tout en assurant le passage des gaz chauds favorisant la prise rapide du liant, les convoyeurs 13, 14 compriment le matelas pour lui donner l'épaisseur souhaitée. A titre d'exemple, pour un feutre roulé, celle-ci est typiquement comprise entre 10 et 150 mm, la densité de la couche de laine de verre étant par exemple comprise entre 10 et 100 kg/m³.

La cuisson dans l'enceinte 12 induit l'évaporation de l'eau résiduelle sous la forme de fumées qui sont récupérées et traitées à la sortie de l'enceinte, ainsi que la réticulation du liant entre les fibres du matelas.

Sur la figure 1, on a représenté un système de réception et de convoyage des fibres comprenant un système à bande sans fin. Toutefois, le présent procédé peut être également mis en oeuvre par un système comprenant plusieurs zones de réception correspondantes chacune à une ou plusieurs machines de fibrage, chaque zone de réception étant par exemple constituée d'une paire de tambours mus en rotation inverse, selon les principes illustrés par le brevet EP 0 406 107.

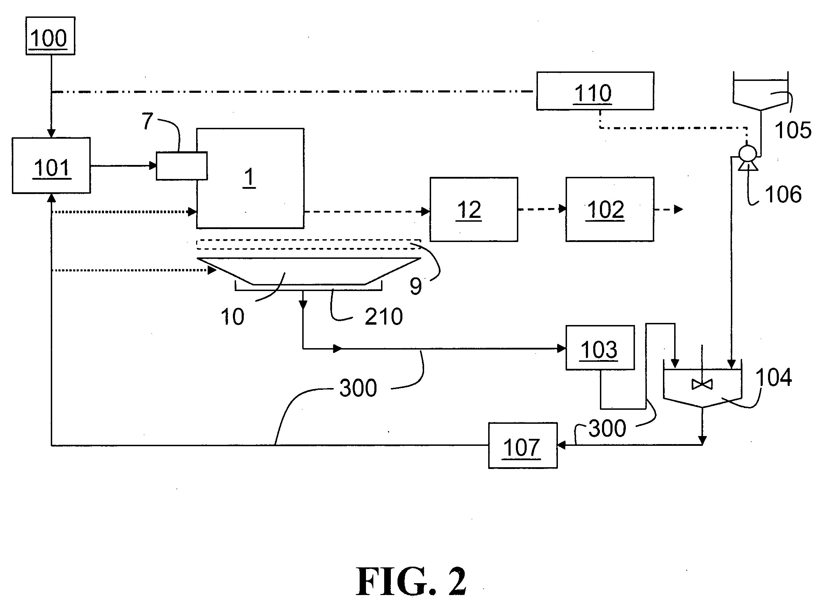

Le diagramme de la figure 2 illustre une vue schématique et synoptique, incorporant le dispositif de fibrage selon la figure 1, d'un mode de réalisation d'une ligne selon l'invention de production de panneaux isolants à base de laine de verre, incorporant un circuit de recyclage de l'eau en excès issue du dispositif de fibrage précédemment décrit.

Sur les figures 1 à 4, des éléments identiques ou de même nature portent des numéros de référence identiques. Comme décrit en relation avec la figure 1, le dispositif de fibrage 1 permet l'obtention, sur le convoyeur 9 à bande sans fin, d'un matelas de fibres imprégnées de la solution acrylique, qui est ensuite mis en forme et cuit dans l'enceinte 12, puis soumis à d'autres opérations bien connues telles que la découpe des bords, les découpes longitudinales et/ou transversale, le surfaçage etc., au sein de divers dispositifs 102 de technologie connue. Les flèches en pointillés indiquent le sens d'avancée du matelas de fibres dans l'installation.

Comme indiqué précédemment, la bande sans fin du convoyeur 9 est perméable aux fluides tels que les fumées et l'eau en excès, qui sont aspirées par les caissons 10. Des moyens de collecte 210 de la phase aqueuse, incorporant le liant en excès ainsi que des fines, sont disposés sous les moyens d'aspiration 10. Selon l'invention, ces moyens 210 sont en communication de fluide avec un circuit de recycle 300 des eaux vers le dispositif de fibrage 1. Sur la figure 2, les conduites du circuit de recyclage 300 sont indiquées avec des traits pleins, les flèches indiquant le sens de circulation de la solution aqueuse dans les conduites. L'eau récupérée par les moyens de collecte 210 est ensuite transférée vers un dispositif de filtration 103, configuré pour éliminer les particules et fibres de diamètre supérieur à 500 microns. En sortie du dispositif 103, la phase aqueuse est transférée vers un bac 104 maintenu sous agitation. Le bac 104 peut être mis en communication de fluide avec un réservoir 105 contenant une solution de base par exemple telle que décrite dans les publications US2003/221457, US2006/198954 ou encore US 7,153,437. La solution de base est introduite dans le bac 104 par l'intermédiaire d'un moyen de régulation 106 telle qu'une pompe et/ou une vanne. Selon l'invention, la quantité de base introduite permet de maintenir le pH dans une gamme de valeur pour laquelle le métal constituant les conduites du circuit 300 est préservé. Selon l'invention, il a été trouvé que la gamme de pH pouvait varier de plusieurs unités de pH autour de la neutralité sans que l'équipement ne soit sensiblement affecté dans le temps. La solution finalement obtenue après introduction de la base est ensuite au moins partiellement recyclée vers une station 101 de préparation de la solution aqueuse de liant acrylique, une autre partie pouvant éventuellement être utilisé pour le lavage des caissons 10 ou des parois mobiles de la hotte de fibrage.

De manière préférée, un second dispositif de filtration 107, disposé en sortie du bac 104, permet l'élimination des particules et fibres dont le diamètre est supérieur à 50 microns.

La station 101 de préparation de la solution aqueuse du liant èst alimentée par une résine du polyacide stocké dans un container 100, le plus souvent sous la forme d'une solution aqueuse déjà prédiluée, contenant typiquement environ 50% poids de solide. Des exemples de telles compositions sont par exemple décrites dans les publications US2003/221457, US2006/198954 ou encore US 7,153,437.

La composition aqueuse de liant, injectée par les dispositifs de pulvérisation 7 (cf. figure 1), est préparée dans la station 101 à partir de la solution issue du container 100 dont le titre est bien connu. Au niveau de la station 101, cette solution initiale est diluée dans les proportions nécessaires à la mise en oeuvre du procédé de fibrage. La dilution est effectuée selon l'invention au moins en partie grâce à la solution aqueuse issue du circuit 300 de recyclage. Bien évidemment, bien que non représentés sur la figure 2, des moyens d'appoint en eau propre sont également prévus, au niveau de la station 101 ou alternativement sur un élément du circuit 300 de recyclage ou encore au niveau du bac 104.

En général, les compositions d'encollage à base d'acrylique se caractérisent par une quantité d'eau plus importante que les solutions du type formophénolique, le pourcentage poids de l'extrait sec du liant solide dans la composition d'encollage n'excédant en général pas 20% poids, ce qui explique que les quantités d'eau circulant dans le circuit 300 soient relativement importantes ainsi que l'importance économique et environnementale d'un tel recyclage.

Selon l'invention, le débit ou la quantité injectée de liant acide contenu dans le container 100 est régulé par un dispositif de mesure et de contrôle 110. Le moyen de régulation 106 du débit de la base est assujetti au dispositif 110. Selon l'invention, le dispositif 110 commande, en fonction de la mesure du débit de résine/liant acide et par l'intermédiaire du moyen 106, l'introduction dans le bac 104 d'une quantité déterminée de base suivant une relation simple entre le débit du liant acide et le débit de la solution de base. Selon l'invention, tout au long du procédé de fibrage, et notamment lorsque le débit de liant acide introduit doit être modifié, pour les besoins dudit procédé le débit de base introduit est directement ajusté en fonction de cette nouvelle valeur sans qu'il soit besoin de faire intervenir des sondes ou capteurs, tel que décrit dans l'art antérieur. Ainsi, en fonction uniquement de la mesure des débits respectifs du liant et de l'agent de modification du pH, il est possible selon l'invention de préserver le circuit de recyclage tout au long du procédé de fibrage. En particulier, selon l'invention, toute variation du débit de liant acide au cours du procédé de fibrage entraîne une modification et un ajustement du débit de l'agent de modification du pH, permettant de contrôler de façon simple, sûre et économique le pH dans le circuit de recyclage. Le dispositif 110 comprend par exemple un capteur tel qu'un débitmètre associé à une logique et un actionneur, par exemple du type vanne de contrôle ou variateur. Ces deux derniers systèmes permettent d'imposer le débit contrôlé de la solution de base. Bien entendu, le dispositif 110 n'est pas limité à cette seule réalisation, tout dispositif ou système équivalent ou alternatif pouvant être utilisé sans sortir du cadre de la présente invention.

Sans que l'invention n'y soit limitée, de façon surprenante, il a été trouvé par le demandeur, selon les principes précédemment exposés, qu'une relation simple, par exemple de proportionnalité sous la forme d'un ratio R entre le débit du liant acide et le débit de la solution de base, était suffisante pour maintenir l'acidité des eaux circulant dans le circuit à des niveaux acceptables pour la préservation du circuit 300. Le ratio R peut être défini à partir des caractéristiques chimiques des constituants de la composition d'encollage (nombre de fonctions acides apportées par les constituants de l'encollage et constantes d'acidité pK_{A} associées) des paramètres du procédé (introduction d'eau de dilution) et de l'installation (efficacité) et en fonction du type de base utilisée comme agent neutralisant (constante de basicité pK_{B}).

Selon un mode avantageux de l'invention, il est possible d'ajuster ou de recaler périodiquement le ratio R entre les débits de liant acide et de solution de base par des mesures ponctuelles du pH de la solution aqueuse en un ou plusieurs points du circuit de recycle. Les essais menés par le demandeur ont montré que des mesures de pH effectuées sur la ligne 300, espacées de plusieurs minutes, voire plusieurs dizaines de minutes et même quelquefois de plusieurs heures, s'avéraient cependant suffisantes pour détecter et remédier à une éventuelle dérive et au final pour éliminer tout risque de corrosion des conduites. Cette prise de pH ne requiert pas de précision excessive et peut-être effectuée simplement par un opérateur en plongeant un simple papier pH dans un aliquot de liquide prélevé en un point quelconque du circuit de recycle 300. On a ainsi vérifié que le pH des eaux de recycle pouvait librement fluctuer au cours d'une vague de production dans une large gamme d'environ 6 à environ 9, sans dégradation notable des équipements.

Bien évidemment, et notamment si une variation moins importante de la gamme de pH dans le circuit 300 est recherchée, des relations plus complexes qu'une simple proportionnalité peuvent être utilisées sans sortir du cadre de l'invention. En particulier, selon un mode de réalisation possible, la relation entre le débit du liant acide et le débit de la solution de base peut être matérialisée sous la forme d'abaques pré-établies, et par exemple caractéristique de l'installation en présence.

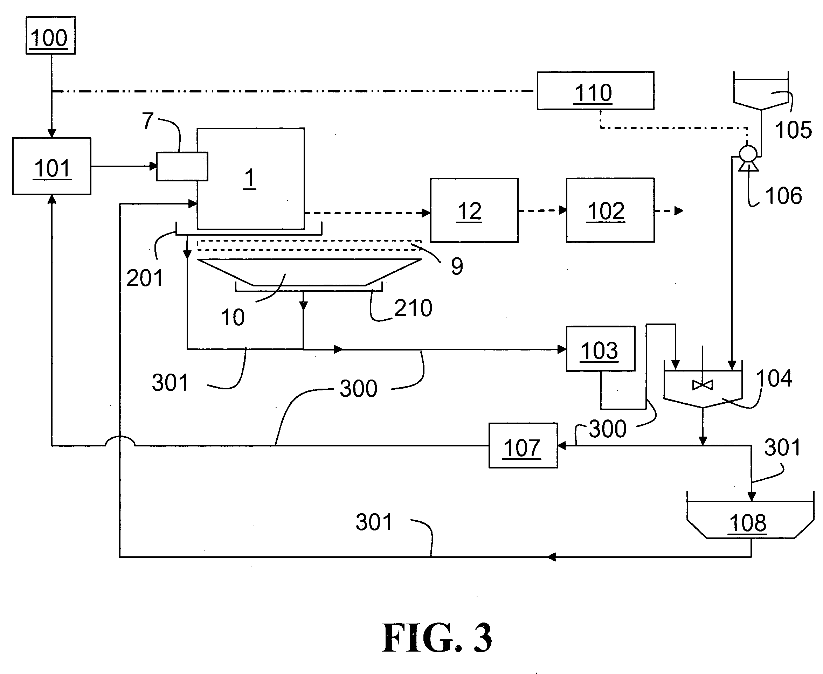

La figure 3 illustre une variante de réalisation, dans lequel la boucle 300 de recyclage des eaux issues du procédé de fibrage incorpore l'utilisation d'une partie des eaux récupérées pour le lavage des parois de la chambre ou hotte de fibrage. Des moyens supplémentaires de collecte 201 permettent la récupération des eaux de lavage des parois de la hotte de fibrage. Ces moyens 201 sont reliés au circuit de recycle 300 des eaux issues des caissons d'aspiration 10 par des conduites supplémentaires 301. Les eaux récupérées des moyens de collecte 201 et 210 sont ainsi mélangées dans le circuit 300. Sans sortir du cadre de l'invention, une partie des eaux récupérées dans le circuit 300 peut également provenir d'une unité de lavage des gaz issus de l'unité de fibrage 1. Selon les principes déjà décrits en relation avec la figure 2, les eaux de récupération sont filtrées dans le dispositif 103 et neutralisées dans le bac 104. Une partie des eaux traitée est ensuite dirigée vers la station 101, tel que décrit précédemment en relation avec la figure 2, tandis qu'une autre partie est collectée dans un puits 108, avant d'être réutilisée pour le lavage des parois de la hotte de fibrage 1.

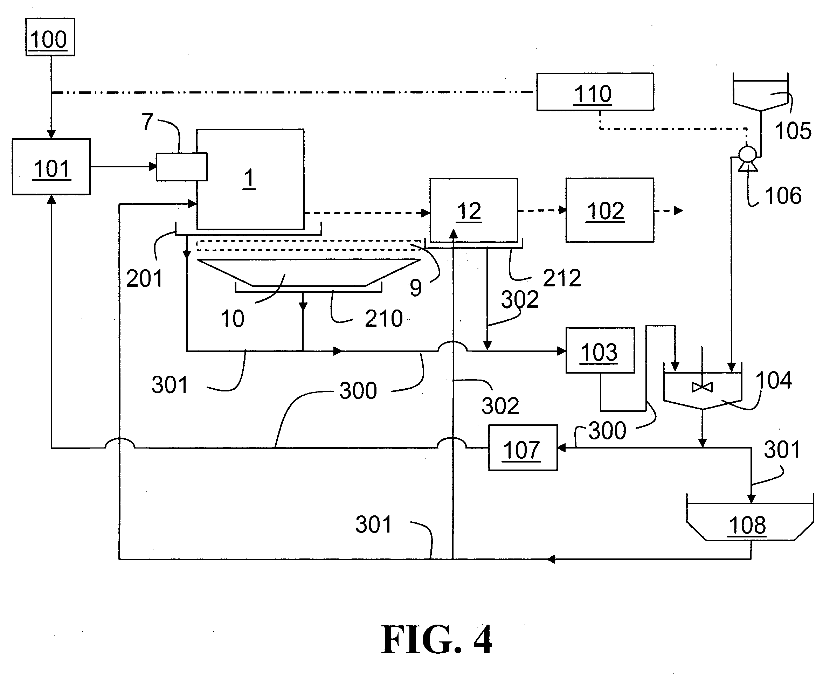

La figure 4 illustre un mode de réalisation identique au précédent, mais dans lequel la boucle 300 de recyclage des eaux issus du procédé de fibrage incorpore l'utilisation d'une partie des eaux récupérées à la fois pour le lavage des parois de la chambre ou hotte de fibrage et pour l'élimination des résidus de liant et de fibres dans l'étuve 12. A cet effet, des moyens de récupération 212 des eaux de lavage de l'étuve 12 et/ou des fumées issues de celle-ci sont prévus en supplément, ainsi que des conduites supplémentaires 302, permettant d'une part l'introduction des eaux récupérées dans la boucle 300 et d'autre part de réinjecter une partie de l'eau traitée au niveau du bac 104 vers l'étuve 12 ou le système de lavage des fumées issues de celle-ci, tel que cela est illustré sur la figure 4.

Au contraire de l'enseignement antérieur, les essais menés par le demandeur, sur des installations telles que schématisées par les figures 1 à 4 précédentes, ont fait apparaître qu'il n'est nullement indispensable d'utiliser des dispositifs de contrôle gérant en continu des sondes mesurant le pH ou le niveau de corrosion pour éviter une dégradation rapide par corrosion des conduites du circuit. Tout particulièrement, les solutions précédemment exposées ou telles que décrites dans les revendications qui suivent, beaucoup plus simples et moins onéreuses que celles décrites précédemment, permettent d'arriver à un résultat tout aussi satisfaisant.

A titre d'exemple, on a pu mesurer, sur une installation du type de celle que schématisée par la figure 4, que le pH du circuit de recycle des eaux d'un procédé incorporant l'utilisation d'un liant acrylique, pouvait être maintenu plusieurs heures dans un domaine de pH compris entre 6 et 9 sans besoin d'une intervention extérieure ni de modifications des conditions initiales de fonctionnement du dispositif 110. Dans cet exemple, on a entré au niveau du dispositif 110 une valeur de consigne pour le rapport entre la quantité de la solution de soude issue du réservoir 105 puis introduite dans le circuit (c'est-à-dire dans le bac 106) et la quantité de la solution de liant introduite dans le procédé au niveau du dispositif de pulvérisation 7.

Les conditions de l'expérimentation ont été les suivantes :
- Ratio R volumique de la quantité de soude pure introduite sur quantité de résine introduite (hors dilution) : R = 0,1,
- Dilution de la résine à 5% volume,
- Dilution de la soude à 50% en volume,
- Débit sensiblement constant de liant en sortie du dispositif de pulvérisation : 200 l/h,
- Débit continu de soude en sortie de la pompe 106 vers le bac 104 : 2 l/h.

## Revendications

1. Procédé de contrôle du niveau de corrosivité d'une solution aqueuse récupérée lors d'un procédé de production d'un matelas de fibres minérales, comprenant notamment le fibrage et la liaison desdites fibres par un liant comprenant un polyacide typiquement du type acrylique, ladite solution aqueuse étant recyclée au moins en partie vers une zone de préparation dudit liant et/ou une zone de lavage de l'installation de production, le procédé **se caractérisant en ce qu'**on maintient le pH de la solution dans le circuit de recyclage entre des valeurs minimale et maximale par l'introduction dans ledit circuit d'un agent de modification dudit pH telle qu'une base, le débit de l'agent de modification du pH étant ajusté directement en fonction du débit de liant acide introduit au cours du procédé de fibrage, sans l'utilisation de dispositifs de contrôle gérant en continu des sondes mesurant le pH ou le niveau de corrosion des conduites du circuit.

2. Procédé de contrôle selon la revendication 1, dans lequel le débit de l'agent de modification du pH dans le circuit de recyclage est directement proportionnel au débit de liant acide introduit dans le procédé de fibrage.

3. Procédé de contrôle selon la revendication 2 dans lequel on ajuste à intervalles réguliers le ratio R par une mesure ponctuelle du pH des eaux récupérés au niveau du circuit de recyclage.

4. Procédé de contrôle selon l'une des revendications précédentes, dans lequel la valeur du pH est comprise entre environ 6 et environ 9.

5. Procédé de contrôle selon l'une des revendications précédentes, dans lequel les eaux du procédé de fibrage sont récupérées au moins en partie au niveau du tapis de convoyage des fibres, après ledit fibrage.

6. Procédé de contrôle selon l'une des revendications précédentes, dans lequel les eaux du procédé de fibrage sont récupérées au moins en partie au niveau de l'étuve de réticulation des fibres minérales.

7. Procédé de contrôle selon l'une des revendications précédentes, dans lequel l'eau récupérée est au moins en partie utilisée pour le lavage d'au moins un des éléments constitutifs du dispositif d'obtention du matelas de fibres, notamment les parois de la chambre ou hotte de fibrage, les moyens de convoyage des fibres, les moyens de ventilation mis en oeuvre pour l'élimination de l'excès d'eau dans le matelas fibreux ou encore l'enceinte de réticulation des fibres.

8. Procédé de contrôle selon l'une des revendications précédentes, dans lequel l'agent de modification du pH est choisi parmi les bases alcalines du type hydroxyde ou carbonate d'alcalin ou d'alcalino-terreux.

9. Procédé de contrôle selon l'une des revendications précédentes, dans lequel le polyacide est choisi parmi les acides polycarboxyliques de la famille des acides acrylique, méthacrylique, crotonique, isocrotoniques, maléïque, cinnamique.

10. Installation de production d'un matelas de fibres comprenant une unité de fibrage (1) incorporant des moyens (7) de pulvérisation d'une solution d'un liant comprenant un polyacide typiquement du type acrylique sur les fibres néoformées, des moyens de réception et de convoyage (9) des fibres imprégnées du liant vers une enceinte de réticulation (12) et des moyens d'aspiration (10) d'une solution aqueuse comprenant l'eau et le liant en excès dans le matelas de fibres réceptionné sur les moyens de convoyage (9), lesdits moyens d'aspiration (10) étant en communication de fluide avec une boucle de recycle (300) de ladite solution aqueuse vers une station de préparation (101) de la solution de liant alimentant les moyens de pulvérisation (7) et/ou vers des moyens de lavage de l'installation, ladite installation **se caractérisant en ce qu'**elle comprend en outre des moyens d'introduction et de régulation (105, 106) d'une quantité contrôlée d'un agent de modification dudit pH telle qu'une base et **en ce que** lesdits moyens de régulation (105, 106) sont assujettis à des moyens de contrôle (110) calibrés en fonction de la quantité du polyacide introduite dans l'unité de fibrage (1), ledit dispositif ne comprenant pas de dispositifs de contrôle gérant en continu des sondes mesurant le pH ou le niveau de corrosion des conduites du circuit.

## Patentansprüche

1. Verfahren zum Steuern des Korrosionspotentials einer wässrigen Lösung, welche während eines Verfahrens zur Herstellung von Mineralfasermatten rückgewonnen wird, insbesondere die Zerfaserung und das Binden der Fasern mittels eines Bindemittels umfassend, welches eine Polysäure, typischerweise eine Polyacrylsäure ist, wobei die wässrige Lösung wenigstens zum Teil in einem Herstellungsbereich des Bindemittels und/oder einer Waschzone der Produktionsanlage wiederverwendet wird, wobei das Verfahren **dadurch gekennzeichnet ist, dass** man den pH der Lösung in dem Recycling-Kreislauf zwischen Minimal- und Maximalwerten hält, indem man dem Kreislauf ein pH-Modifikationsmittel, wie zum Beispiel eine Base, zuführt, wobei der Zustrom des pH-Modifikationsmittels als direkte Funktion der Bindemittel-Säure eingestellt wird, welche während des Zerfaserungsprozesses zugeführt wird, ohne Verwendung von Regelvorrichtungen, welche kontinuierlich Messsonden für den pH-Wert oder den Korrosionszustand der Kreislaufleitungen abfragen.

2. Steuerverfahren nach Anspruch 1, bei welchem der Zustrom des pH-Modifikationsmittels in dem Recyclingkreislauf direkt proportional dem Fluss der Bindemittel-Säure ist, welche in den Zerfaserungsprozess eingebracht wird.

3. Steuerverfahren nach Anspruch 2, wobei man in regelmäßigen Intervallen das Verhältnis R durch eine punktuelle Messung des aus dem Recyclingkreislauf wiedergewonnenen Wassers einstellt.

4. Steuerverfahren nach einem der vorhergehenden Ansprüche, wobei der pH-Wert zwischen 6 und 9 liegt.

5. Steuerverfahren nach einem der vorhergehenden Ansprüche, wobei das Wasser des Zerfaserungsprozesses wenigstens zum Teil nach der Zerfaserung auf Höhe des Fasertransportbandes wiedergewonnen wird.

6. Steuerverfahren nach einem der vorhergehenden Ansprüche, wobei das Wasser des Zerfaserungsprozesses wenigstens zum Teil auf Höhe des Aushärteofens für die Mineralfasern wiedergewonnen wird.

7. Steuerverfahren nach einem der vorhergehenden Ansprüche, wobei das wiedergewonnene Wasser wenigstens zum Teil zum Spülen wenigstens eines Bauelementes der Vorrichtung zum Erhalten von Fasermatten verwendet wird, insbesondere der Kammerwände oder dem Fallschacht, die Fasertransportmittel, die Absaugvorrichtungen, welche zur Beseitigung des Wasserüberschusses in den Fasermatten eingesetzt werden, oder zusätzlich der Aushärteeinrichtung für die Fasern.

8. Steuerverfahren nach einem der vorhergehenden Ansprüche, wobei das pH-Modifikationsmittel aus Alkalihydroxidbasen oder Alkalicarbonaten oder Erdalkalicarbonaten ausgewählt wird.

9. Steuerverfahren nach einem der vorhergehenden Ansprüche, wobei die Polysäure ausgewählt wird aus der Gruppe bestehend aus: Acrylsäuren, Methacrylsäuren, Crotonsäuren, Isocrotonsäuren, Maleinsäuren, Zimtsäuren.

10. Produktionsanlage für Fasermatten, umfassend ein Zerfaserungsaggregat (1), mit einer Zerstäubungseinrichtung (7) für eine Bindemittellösung auf den neu gebildeten Fasern, wobei das Bindemittel eine Polysäure umfasst, welche typischerweise vom Typ einer Acrylsäure ist, Mitteln zur Aufnahme und zum Fördern (9) der bindemittelimprägnierten Fasern in Richtung einer Aushärteeinrichtung (12) und Mitteln zum Absaugen (10) einer wässrigen Lösung, welche Wasser und das Bindemittel im Überschuss aus den Fasermatten, welche sich auf den Fördereinrichtungen (9) befinden enthalten, wobei die Absaugeinrichtung (10) in Flüssigkeitsverbindung mit einer Recyclingschleife (300) der wässrigen Lösung in Richtung einer Herstellungseinrichtung für das Bindemittel (101) steht, welches der Zerstäubereinrichtung (7) zugeführt wird und/oder welches der Einrichtung zum Spülen der Anlage zugeführt wird, wobei die Anlage **dadurch gekennzeichnet ist, dass** sie unter anderem Mittel zur Einführung einer Regelung (105, 106) einer kontrollierten Menge eines Modifikationsmittels für den pH umfasst, beispielsweise eine Base und wobei die Mittel zur Regelung (105, 106) Steuereinrichtungen (110) unterworfen sind, welche kalibriert sind als Funktion der Polysäuremenge, welche in das Zerfaserungsaggregat (1) eingebracht wird, wobei die Vorrichtung keine Steuervorrichtung aufweist, welche kontinuierlich Messsonden für den pH-Wert oder den Korrosionszustand der Kreislaufleitungen abfragt.

## Claims

1. A method of controlling the level of corrosivity of an aqueous solution recovered during a process for producing a blanket of mineral fibers, comprising in particular the fiberizing and the coating of said fibers with a binder comprising a polyacid typically of the acrylic type, said aqueous solution being at least partly recycled into a zone in which said binder is prepared and/or a scrubbing zone of the production plant, the method being **characterized in that** the pH of the solution in the recycling circuit is maintained between minimum and maximum values by injecting into said circuit an agent for modifying said pH, such as a base, the flow rate of the pH-modifying agent being adjusted directly according to the flow rate of acid binder injected during the fiberizing process, without the use of control devices that continuously control the probes measuring the pH or the level of corrosion of the pipes of the circuit.

2. The control method as claimed in claim 1, in which the flow rate of the pH-modifying agent in the recycling circuit is directly proportional to the flow rate of acid binder injected in the fiberizing process.

3. The control method as claimed in claim 2, in which the ratio R is adjusted at regular intervals by a spot measurement of the pH of the water recovered in the recycling circuit.

4. The control method as claimed in one of the preceding claims, in which the value of the pH is between about 6 and about 9.

5. The control method as claimed in one of the preceding claims, in which the fiberizing process water is at least partly recovered on the fiber-conveying belt after said fiberizing.

6. The control method as claimed in one of the preceding claims, in which the fiberizing process water is at least partly recovered in the mineral fiber crosslinking oven.

7. The control method as claimed in one of the preceding claims, in which the recovered water is at least partly used to scrub at least one of the constituent elements of the device for obtaining the fiber blanket, especially the walls of the fiberizing chamber or hood, the fiber-conveying means, the venting means used for removing the excess water from the fiber blanket, or even the fiber crosslinking enclosure.

8. The control method as claimed in one of the preceding claims, in which the pH-modifying agent is chosen from alkaline bases of the alkali or alkaline-earth metal hydroxide or carbonate type.

9. The control method as claimed in one of the preceding claims, in which the polyacid is chosen from polycarboxylic acids of the family of acrylic, methacrylic, crotonic, isocrotonic, maleic and cinnamic acids.

10. A plant for producing a fiber blanket, comprising a fiberizing unit (1) incorporating means (7) for spraying a solution of a binder comprising a polyacid, typically of the acrylic type, onto the newly-formed fibers, means (9) for collecting the binder-impregnated fibers and for conveying them to a crosslinking enclosure (12) and suction means (10) for sucking up an aqueous solution comprising the excess binder and water from the fiber blanket collected on the conveying means (9), said suction means (10) being in fluid communication with a recycle loop (300) for recycling said aqueous solution into a station (101) for preparing the binder solution supplying the spray means (7) and/or into means for scrubbing the plant, said plant being **characterized in that** it further includes means (105, 106) for injecting and regulating a controlled amount of a pH-modifying agent such as a base and **in that** said regulating means (105, 106) are slaved to control means (110) calibrated according to the amount of polyacid injected into the fiberizing unit (1), said device comprising no control devices that continuously control the probes measuring the pH or the level of corrosion of the pipes of the circuit.
